# EUROPÄISCHE PATENTSCHRIFT

(11) **EP 1 690 274 B1**
(45) Veröffentlichungstag und Bekanntmachung des Hinweises auf die Patenterteilung: **16.07.2008**
(21) Anmeldenummer: 04798027.1
(22) Anmeldetag: 20.11.2004
(51) Int. Cl.: H01H 21/22, B60Q 1/14

(54) **SCHALTERMODUL**
SWITCH MODULE
MODULE DE COMMUTATION

(30) Priorität: 05.12.2003 DE 10357668; 05.12.2003 DE 10357667; 08.07.2004 DE 102004033447
(43) Veröffentlichungstag der Anmeldung: 16.08.2006
(73) Patentinhaber: Valeo Schalter und Sensoren GmbH, 74321 Bietigheim-Bissingen (DE)
(72) Erfinder: HASCH, Martin, 71701 Schwieberdingen (DE); LIPPERT, Rainer, 74076 Heilbronn (DE); SIMONIS, Karl, 75428 Illingen (DE); GRÜNER, Roland, 71732 Tamm (DE); BINDER, Bernd, 74372 Sersheim (DE); SUCHANEK, Jürgen, 74363 Güglingen (DE)
(74) Vertreter: Steimle, Josef
(86) Internationale Anmeldenummer: PCT/EP2004/013207
(87) Internationale Veröffentlichungsnummer: WO 2005/055261

(56) Entgegenhaltungen:
- EP-A- 1 020 884
- DE-A- 3 940 284
- DE-A- 4 328 395
- FR-A- 2 666 926
- FR-A- 2 825 975
- GB-A- 1 231 712
- US-A- 4 414 442

## Beschreibung

Die Erfindung betrifft ein Schaltermodul, insbesondere mit einem schwenkbar in einem Lagergehäuse gelagerten Schalthebel, wobei der Schalthebel zwei einander gegenüberliegende frei abragende Lagerzapfen und das Lagergehäuse Aufnahmeöffnungen aufweisen.

Derartige Schaltermodule werden zum Beispiel als Lenkstockschalter in einem Kraftfahrzeug verwendet. Derartige Lenkstockschalter dienen zum Beispiel als Lichtschalter, Blinkerschalter, Scheibenwischerschalter usw. Da der Schalthebel relativ lang ist und Fahrzeuge stets Vibrationen verursachen, werden an die Lagerstellen hohe Anforderungen hinsichtlich ihrer Langlebigkeit und Spielfreiheit gestellt. Insbesondere das Lagerspiel verursacht Geräusche, die zum Teil als störend empfunden werden. Herkömmliche Lager weisen eine runde Aufnahmeöffnung auf, in denen ein Rundbolzen gelagert ist. Durch die extremen Temperaturschwankungen, die derartige Schaltermodule ausgesetzt sind, muss auf jeden Fall vermieden werden, dass der Rundbolzen in der Aufnahmeöffnung verklemmt und ein Verschwenken des Schalthebels nicht oder nicht mehr zuverlässig möglich ist. Daher besitzen die in den Aufnahmeöffnungen liegenden Rundbolzen stets ein Spiel, was aber zu den oben erwähnten Problemen führen kann.

Aus der FR-A 2 666 926 ist ein keilförmiger Lagerzapfen bekannt, welcher in einer gerundeten Aufnahmeöffnung liegt. Diese Lagerung ist nicht exakt und besitzt Spiel, da die Schneide des Keils in der gerundeten Aufnahmeöffnung verrutschen kann.

Der Erfindung liegt daher die Aufgabe zugrunde, ein Schaltermodul bereit zu stellen, welches weniger Geräusche verursacht.

Diese Aufgabe wird mit einem Schaltermodul gelöst, das die Merkmale des Anspruchs 1 aufweist.

Durch die polygonale Ausgestaltung der Aufnahmeöffnung werden diskrete Anlageflächen für den Lagerzapfen erzeugt, sodass der Lagerzapfen, der von einer definierten Kraft in eine Richtung oder Ecke der Aufnahmeöffnung gedrängt wird, eine definierte Lage einnimmt. Dabei kann die Anlagefläche in der Aufnahmeöffnung eben oder konvex oder konkav gekrümmt sein. Mit Vorzug wird die den Lagerzapfen aufnehmende Ecke der Aufnahmeöffnung von einem V-förmigen Abschnitt gebildet, sodass der Lagerzapfen an den beiden Schenkeln des Aufnahmebereichs anliegt. Ein Abheben des Lagerzapfens von der Anlagefläche wird dadurch verhindert, das der Lagerzapfen mit einer definierten, insbesondere einstellbaren Kraft anliegt. Das Spiel kann deshalb relativ großzügig bemessen werden, ohne dass Klappergeräusche befürchtet werden müssen.

Bei einer Weiterbildung der Erfindung ist vorgesehen, dass das Lagergehäuse einen Lagerbock bildet, der seinerseits zwei Lagerzapfen aufweist, deren Achsen orthogonal zu den Achsen der Aufnahmeöffnungen liegen. Dabei weist das Modulgehäuse zwei Aufnahmeöffnungen für die Lagerzapfen des Lagerbockes auf, die abschnittsweise ebenfalls polygonal ausgebildet sind. Dadurch werden auch die Lagerzapfen des Lagerbockes spielfrei in den polygonalen Aufnahmeöffnungen gehalten und liegen ebenfalls unter einer vorbestimmten Kraft an den Anlageflächen an.

Erfindungsgemäß bilden die Lagerzapfen des Schalthebels und die Lagerzapfen des Lagerbockes zusammen mit den Aufnahmeöffnungen im Lagerbock und den Aufnahmeöffnungen im Modulgehäuse ein Kardangelenk. Der Schalthebel kann von der Bedienperson demnach sowohl nach oben als auch nach unten sowie nach vorne und nach hinten verschwenkt werden, wobei alle Schwenkrichtungen bzw. alle Schwenkbewegungen spielausgeglichen sind.

Vorzugsweise liegt bezüglich des Lagers dem Schalthebel eine Schaltstückführung gegenüber, die sich an einer Wand des Modulgehäuses abstützt. Diese Abstützkraft, die erfindungsgemäß durch eine Wendel-Druckfeder aufgebracht wird, drängt die Lagerzapfen des Schalthebels in die Aufnahmeöffnungen des Lagerbockes und drängt die Lagerzapfen des Lagerbockes in die Aufnahmeöffnungen des Modulgehäuses. Es genügt also ein einziges Federelement für den Spielausgleich. Anstelle einer Wendel-Druckfeder können jedoch auch andere Bauteile zum Erzeugen der Andruckkraft verwendet werden, insbesondere auch Materialanhäufungen im Bereich der Aufnahmeöffnungen, zum Beispiel Federlippen und dergleichen, wobei aber auch Federelemente direkt im Bereich der Aufnahmeöffnungen vorgesehen sein können, die auf die Lagerzapfen einwirken.

Bei einem bevorzugten Ausführungsbeispiel ist die Aufnahmeöffnung im wesentlichen dreieckig ausgebildet. Der Lagerzapfen liegt dabei zwischen den beiden Dreieckschenkeln, wobei durch deren Öffnungswinkel die Anpresskraft und somit auch das Reibmoment des Lagerzapfens in der Aufnahmeöffnung eingestellt werden kann.

Gemäß einem bevorzugten Ausführungsbeispiel der Erfindung ist der Schalthebel in Richtung seines, einer Bedienperson zugewandten Betätigungsendes kraftbeaufschlagt. Dies erfolgt auf einfache Weise, wie bereits erwähnt, dadurch, dass am dem Betätigungsende gegenüberliegenden Ende eine Druckfeder angreift.

Weiter Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine perspektivische Darstellung eines Schaltermoduls;
- Figur 2: das Schaltermodul gemäß Figur 1 teilweise aufgebrochen;
- Figur 3: eine vergrößerte Wiedergabe eines Ausschnitts III gemäß Figur 2;
- Figur 4: eine perspektivische Darstellung des im Modulgehäuse gelagerten Abschnitts des Schalthebels mit Lagerbock;
- Figur 5: eine vergrößerte Wiedergabe eines Ausschnitts V gemäß Figur 4;
- Figur 6: einen Schnitt VI - VI gemäß Figur 1; und
- Figur 7: einen Schnitt VII - VII gemäß Figur 6.

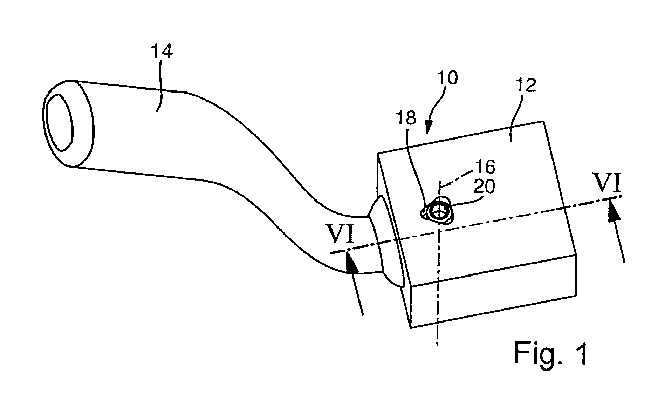

Die Figur 1 zeigt ein insgesamt mit 10 bezeichnetes Schaltermodul, wie es zum Beispiel in Form eines Lenkstockschalters verwendet wird. Mit einem derartigen Schaltermodul 10 können zum Beispiel Blinker, Scheibenwischer, Lichter und dergleichen geschaltet werden. Das Schaltermodul 10 weist ein Modulgehäuse 12 auf, welches lediglich beispielhaft dargestellt ist. Aus dem Modulgehäuse 12 ragt ein Schalthebel 14, der um eine erste Achse 16 schwenkbar im Modulgehäuse 12 gelagert ist. Hierfür weist das Modulgehäuse 12 zwei einander gegenüberliegend angeordnete Aufnahmeöffnungen 18 auf, in welchen jeweils ein Lagerzapfen 20 gelagert ist.

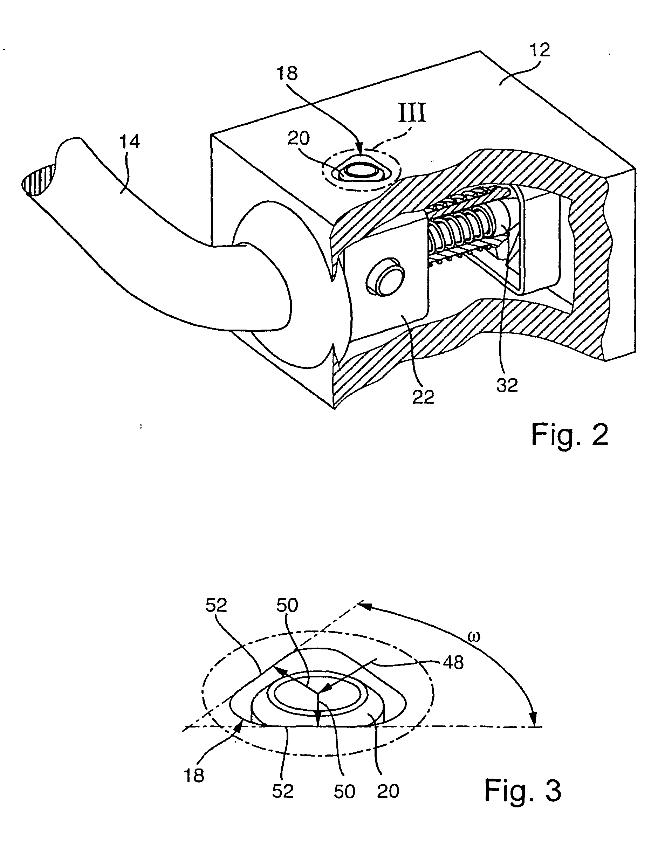

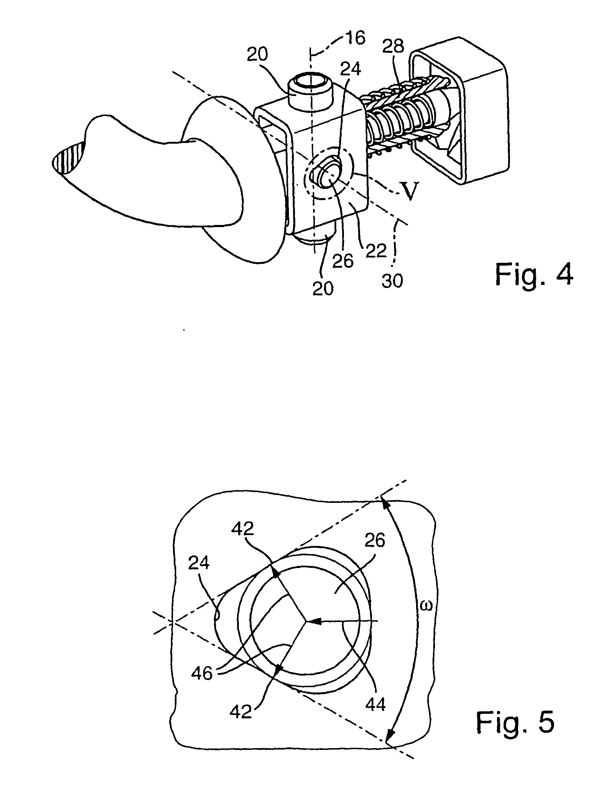

Aus Figur 2 ist erkennbar, dass der Lagerzapfen 20 von einem Lagerbock 22 abragt, wobei der Lagerbock 22 selbst, wie auch aus Figur 4 ersichtlich, Aufnahmeöffnungen 24 aufweist, in welche Lagerzapfen 26 eingreifen, welche an einer Schaltstückführung 28 angeordnet sind. Diese Lagerzapfen 26 bilden eine zweite Schwenkachse 30, welche orthogonal zur ersten Schwenkachse 16 steht.

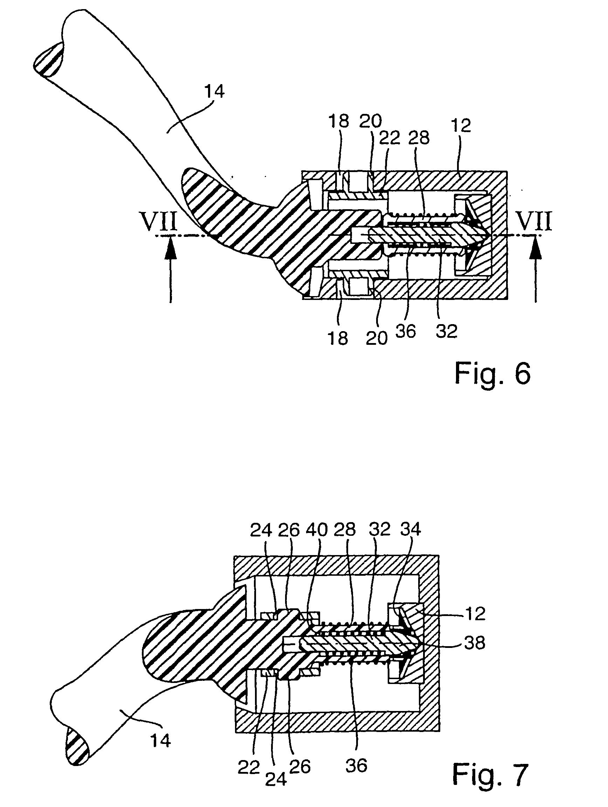

Aus der Figur 7 ist erkennbar, dass der Schalthebel 14 jenseits der Lagerstelle einstückig in die Schaltstückführung 28 ausläuft, wobei die Schaltstückführung 28 hohl ausgebildet ist und einen Rastbolzen 32 umschließt und axial führt. Der Rastbolzen 32 fährt beim Betätigen des Schalthebels 14 eine im Modulgehäuse 12 ausgeformte Kulisse 34 ab und stützt sich an dieser unter der Kraft einer Wendel-Druckfeder 36 ab.

Die Wendel-Druckfeder 36 befindet sich zwischen einem verdickten freien Ende 38 des Rastbolzens 32 und einer Schulter 40 der Schaltstückführung 28 was zur Folge hat, dass durch die Kraft der Wendel-Druckfeder 36 die Schaltstückführung 28 in der Figur 7 nach links aus dem Modulgehäuse 12 herausgedrängt wird. Dies bewirkt, dass die Lagerzapfen 26 der Schaltstückführung 28, wie in den Figuren 4 und 5 dargestellt, an die beiden Flanken 42 der polygonalen Aufnahmeöffnungen 24 gedrückt werden.

Mit dem Pfeil 44 (siehe Figur 5) ist die Kraft der Feder 36 dargestellt, und die Pfeile 46 veranschaulichen die Anpresskraft der Lagerzapfen 26 an den Flanken 42. Durch Veränderung des Winkels Ω sowie durch Veränderung des Durchmessers der Lagerzapfen 26 wird ein definiertes Reibmoment der Lagerzapfen 26 an den Flanken 42 eingestellt.

Da sich die Lagerzapfen 26 in der Aufnahmeöffnung 24 abstützen wird der Lagerbock 22 ebenfalls nach links gedrängt was zur Folge hat, dass die Lagerzapfen 20 des Lagerbockes 22 mit einer Kraft 48 (siehe Figur 3) in die Aufnahmeöffnungen 18 gedrückt werden, wobei sie dort unter der Kraft 50 an den Flanken 52 der Aufnahmeöffnungen 18 anliegen. Auch hier kann über den Winkel Ω und den Durchmesser des Lagerzapfens 20 ein definiertes Reibmoment des Lagerzapfens 20 in der Aufnahmeöffnung 18 eingestellt werden.

Auf jeden Fall liegen alle Lagerzapfen 20 und 26 unter einer bestimmten Vorspannkraft in ihren polygonal ausgebildeten Aufnahmeöffnungen 18 und 24, wodurch ein eventuelles Spiel mit Sicherheit ausgeglichen wird.

## Patentansprüche

1. Schaltermodul mit einem Lagergehäuse und einem darin schwenkbar gelagerten Schalthebel (14) wobei der Schalthebel (14) zwei einander gegenüberliegende, frei abragende Lagerzapfen (26) und das Lagergehäuse Aufnahmeöffnungen (24) aufweisen, wobei die Aufnahmeöffnungen (24) zumindest abschnittsweise polygonal mit zwei Flanken (42) ausgebildet sind, **dadurch gekennzeichnet, dass** der Schalthebel (14) mit seinen Lagerzapfen (26) derart in Richtung einer Ecke der Aufnahme-Öffnung (24) kraftbeaufschlagt ist, dass sie an beide Flanken (42) dieser Ecke gedrückt werden.

2. Schaltermodul nach Anspruch 1, **dadurch gekennzeichnet, dass** das Lagergehäuse einen Lagerbock (22) bildet, der seinerseits zwei Lagerzapfen (20) aufweist, deren Achsen (16) orthogonal zu den Achsen (30) der Aufnahmeöffnungen (24) liegen.

3. Schaltermodul nach Anspruch 2 **dadurch gekennzeichnet, dass** das Modulgehäuse (12) zwei Aufnahmeöffnungen (18) für die Lagerzapfen (20) des Lagerbocks (22) aufweist, die abschnittsweise polygonal ausgebildet sind.

4. Schaltermodul nach Anspruch 2 oder 3, **dadurch gekennzeichnet, dass** die Lagerzapfen (26) des Schalthebels (14) und die Lagerzapfen (20) des Lagerbocks (22) zusammen mit den Aufnahmeöffnungen (24) im Lagerbock (22) und den Aufnahmeöffnungen (18) im Modulgehäuse (12) ein Kardangelenk bilden.

5. Schaltermodul nach Anspruch 1, **dadurch gekennzeichnet dadurch gekennzeichnet, dass** bezüglich des Lagers dem Schalthebel (14) eine Schaltstückführung (28) gegenüber liegt, die sich an einer Wand des Modulgehäuses (12) abstützt.

6. Schaltermodul nach einem der vorhergehenden Ansprüche, **dadurch gekennzeichnet, dass** die Aufnahmeöffnungen (18, 24) im wesentlichen dreieckig sind.

7. Schaltermodul nach einem der vorhergehenden Ansprüche, **dadurch gekennzeichnet, dass** der Schalthebel (14) mittels einer Feder (36) kraftbeaufschlagt ist.

8. Schaltermodul nach einem der vorhergehenden Ansprüche, **dadurch gekennzeichnet, dass** der Schalthebel (14) in Richtung seines, einer Bedienperson zugewandten Betätigungsendes kraftbeaufschlagt ist.

## Claims

1. A switch module comprising a bearing housing with a control lever (14) pivotably disposed therein, wherein the control lever (14) is provided with two freely projecting bearing pins (26) arranged opposite to each other ant the bearing housing is provided with receiving openings (24), the receiving openings (24) are provided at least partially polygonal with two flanks (42), **characterized in that** the control lever (14) with its bearing pins (26) is forcedly urged in the direction of a corner of the receiving opening (24) such that the bearing pins (26) are pressed on both flanks (42) of this corner.

2. The switch module of claim 1, **characterized in that** said the bearing housing forms a bearing block (22) having himself two bearing pins (20) whose axes (16) extend orthogonal to axes (30) of said receiving openings (24).

3. The switch module of claim 2, **characterized in that** the module housing (12) having two receiving openings (18) for the bearing pins (20) of the bearing block (22) which are partially polygonal.

4. The switch module of claim 2 or 3, **characterized in that** said bearing pins (26) of said control lever (14) and said bearing pins (20) of said bearing block (22) form a cardan joint together with said receiving openings (24) in said bearing block (22) and said receiving openings (18) in said module housing (12).

5. The switch module of claim 1, **characterized in that** with respect to said bearing a contact piece guidance (28) is disposed opposite said control lever (14) which is supported on a wall of said module housing (12).

6. The switch module of one of the preceding claims, **characterized in that** said receiving openings (18, 24) are substantially triangular.

7. The switch module of one of the preceding claims, **characterized in that** said control lever (14) is forcedly urged via a spring (36).

8. The switch module of one of the preceding claims, **characterized in that** said control lever (14) is forcedly urged towards an operating end thereof facing a user.

## Revendications

1. Module de commutation comportant un logement de palier et un levier de commande (14) monté de manière pivotante dans celui-ci, le levier de commande (14) étant muni de deux tourillons (26) face à face en forme de saillies libres, et le logement de palier comportant des orifices de réception (24), les orifices de réception (24) étant réalisées au moins par zones avec une forme polygonale avec deux flancs (42), **caractérisé en ce que** le levier de commande (14) avec son tourillon (26) est sollicité par une force en direction d'un angle de l'orifice de réception (24), de telle sorte qu'ils sont poussés contre les deux flancs (42) de cet angle.

2. Module de commutation selon la revendication 1, **caractérisé en ce que** le logement de palier forme un support de palier (22), qui comporte, pour sa part, deux tourillons (20), dont les axes (16) sont disposés orthogonalement aux axes (30) des orifices de réception (24).

3. Module de commutation selon la revendication 2, **caractérisé en ce que** le boîtier du module (12) comporte deux orifices de réception (18) pour les tourillons (20) du support de palier (22), lesquels orifices sont réalisés par zones avec une forme polygonale.

4. Module de commutation selon la revendication 2 ou 3, **caractérisé en ce que** les tourillons (26) du levier de commande (14) et les tourillons (20) du support de palier (22) forment conjointement avec les orifices de réception (24) dans le support de palier (22) et les orifices de réception (18) dans le boîtier du module (12) un joint de cardan.

5. Module de commutation selon la revendication 1, **caractérisé en ce qu'**un guidage d'élément de commande (28), qui prend appui contre une paroi du boîtier du module (12), est situé en face du levier de commande (14) par rapport au palier.

6. Module de commutation selon l'une quelconque des revendications précédentes, **caractérisé en ce que** les orifices de réception (18, 24) sont sensiblement triangulaires.

7. Module de commutation selon l'une quelconque des revendications précédentes, **caractérisé en ce que** le levier de commande (14) est sollicité par la force d'un ressort (36).

8. Module de commutation selon l'une quelconque des revendications précédentes, **caractérisé en ce que** le levier de commande (14) est sollicité par une force en direction de son extrémité de manoeuvre orientée vers la personne de service.
